# EUROPEAN PATENT APPLICATION

(11) **EP 0 962 133 A1**
(43) Date of publication of application: **08.12.1999**
(21) Application number: 99201553.7
(22) Date of filing: 19.05.1999
(51) Int. Cl.: A01N 3/00

(54) **Composition and process for increasing the keepability of Christmas trees**

(30) Priority: 27.05.1998 NL 1009265
(71) Applicant: Laane, Nicolaas Charles Marie, 1412 GS Naarden (NL); Hilhorst, Maria Helena, 6706 CP Wageningen (NL)
(72) Inventor: Laane, Nicolaas Charles Marie, 1412 GS Naarden (NL); Hilhorst, Maria Helena, 6706 CP Wageningen (NL)

(57) **Abstract**

The invention relates to a composition and a process for increasing the keepability of Christmas trees. This prevents the loss of needles, becoming unattractive at home, in the office etc. For that purpose a composition containing at least an organic compound with at least one C6-ring which further contains optionally a carrier material and/or water. Often the cutting surface or the ball of earth is put in a solution of the composition. Preferably is the compound with a least one C6-ring a benzene derivative, such as anisole and/or benzoic acid or a derivative thereof, in particular salicylic acid or an ester thereof. Furthermore the composition may also or in addition to the above contain a terpenoid compound.

## Description

This application relates to a composition for increasing the keepability of (real) Christmas trees and parts thereof such as branches, small branches, optionally when made into decorative Christmas arrangements made with Christmas tree branches (Christmas bouquets).
Under Christmas trees are here to be particularly understood trees, cut trees or with a root ball, branches etc. obtained from Christmas trees, and the latter term will be defined below. Many people who buy a Christmas tree share the problem and the annoyance of seeing the needles fall too soon and the tree becoming generally unattractive. Consequently there is a need for a composition and process for increasing the keepability of Christmas trees.

According to the present invention Christmas trees are particularly understood to be trees, cut or with a root ball, branches, small branches etc obtained from species belonging to the Pinus, Picea, Juniperus and Abies-families such as preferably comprised by the group:
- (Picea abies) Norway spruce,
- (Picea omorica) Serbian spruce,
- (Abies nordmanniana) Caucasian Fir
- (Picea balsamea) Balsam fir,
- (Pseudotsuga douglasii) Douglas fir,
- (Abies fraseri) Fraser fir,
- (Abies procera) Noble fir
- (Pinus sylvestris) Scotch pine,
- (Pinus virginiana) Virginia "scrub" pine,
- (Picea glauca) White spruce
- (Pinus elderica) Afghan pine
- (Pinus strobus) Eastern white pine
- (Juniperus virginiana) Red cedar
- (Cupresso cyparis leylandii) Leyland cypress
- (Cupresus arizonica) Arizona cypress
- (Picea pungens) Colorado Blue spruce
- (Abies balsamea vae. phanerolepis) Balsan fir/Canaan fir
- (Abies concolor) concolor (Colorado)(White) fir
- (Juniperus virginiana) Eastern Red cedar
- (Abies grandis) Grand/Giant fir
- (Abies nobilis) Noble fir
   (Abies koreana)

Some of these trees are virtually only used in North America and no fully accepted European names exist. Therefore in case the above list causes any difficulties as to what has to be regarded as a Christmas tree the scientific name is to regarded as decisive.

Under increasing the keepability is here to be understood preventing (excessive) loss of needles and the drooping of branches when the Christmas trees are used at home, in shops, offices, sales rooms and the like. The invention relates more in particular to improving the keepability of Christmas trees in general (cut, with a root ball, or cut branches/small branches etc.) at home to prevent loss of needles and discolouration of needles and preferably also to increase the fire safety of Christmas trees and branches thereof.

Various suggestions have been made to prevent loss of needles of Christmas trees. For that purpose Christmas trees, optionally after having been made somewhat shorter (fresh cutting surface), were:
a. put in a bucket of gravel and tap water,
b. put in an aqueous MgSO₄ solution,
c. sprayed with a latex solution or submerged therein,
d. sprayed with a plastic solution or submerged therein,
e. sprayed with an organic gel or submerged therein,
f. coated on the cutting surface with bituminous material (pitch).

Only putting Christmas trees in gravel with tap water resulted in a considerable increase of the keepability when compared with trees which were kept deprived of water. Gravel as such has no effect so it was deduced that only water increases the keepability of Christmas trees. The experiments were made with Christmas trees which were freshly harvested or cut two weeks before the experiments were made. (compare U.S. Forestry Commission Research and Development, paper No. 77).
Also the U.S. National Christmas Tree Association (NCTA) recommends users to use only tap water for increasing the keepability of Christmas trees. (Internet http//christree. org/index.html). Therefore according to these suggestions it only makes sense to use (tap) water and the use of additives is discouraged. It is also noteworthy that the authoritative American National Christmas Tree Association recommends to use only tap water to increase the keepability of Christmas trees.

A search amongst the patent literature yielded the following citations:
United States Patent specification (US-A-)2 732 664 (De Klotz) disclosing the treatment of Christmas trees as to retard loss of needles and as to increase the fire resistance by applying externally (e.g. by spraying) calcium chloride and/or immersing the bottom of the tree in a concentrated calcium chloride solution. The spraying of a concentrated calcium chloride solution (e.g. a 33% solution) affects the green colour of the needles and moreover immersing the trunk in a calcium chloride solution for at least 4 days soon after being cut is in practice a rather cumbersome process.
British patent specification (GB-A-)2 189 676 (Halo Products Close Corp.) disclosing enhancing longevity and retarding the senescence (improving the keepability) of cut flowers such as fresh cut roses, carnations, daisies etc with an aqueous solution of a composition comprising:
a sugar e.g. sucrose, glucose or fructose, in an amount of more than wt 80%;
a pH buffer comprising salicylic acid, citric acid, tartaric acid, benzoic acid, isoascorbic acid, sorbic acid, salicylic acid or a mixture of two or more of these organic acids and/or their salts, in an amount of a fraction of a percent to 15 wt%, and
a germicide e.g. a silver salt, a quiniline derivative, hypochlorite, actidione in an amount of a fraction of a percent to 2 wt% and optionally further minor ingredients.
Derwent Abstract AN 95-261146 (JP-A-07 165502 to Tonan Kaihatsu Boeki KK) disclosing a life lengthening agent for cut flower, comprising an aroma chemical containing a compound like borneol, thymol, alpha pinene, limonene, linalol, cymene, camphor, cineol, terpineol and carvacrol as antibacterial component.
It has been shown by the present inventors that current commercial feeding materials for cut flowers such as Chrysal (trademark), Pokon (trademark) and Eurofleur (trademark) when added to the water in which cut flowers are kept have no beneficial effect on the keepability of Christmas trees, especially not on the prevention of shedding of needles. The small list below illustrates this by indicating the effect of the addition of commercially available cut flower feeding materials and sugars on the keepability on Picea abies branches in number of days until shedding of needles became strong. Dosages recommended by the suppliers were used for the commercial products; for sugars 3 grams per litre were used.
- water: 30
- water + Chrysal: 27
- water + Eurofleur: 25
- water + sucrose: 27
- water + glucose: 25

Sugars and commercial flower feeding materials thus have a negative effect on needle retention of Christmas trees. The same applies for the products disclosed in British patent specification (GB-A-)2 189 676 discussed above which have a similar composition. This is not surprising given the long evolutionary distance between the flowering plants and Christmas trees. From a botanical point of view flowering plants like roses, chrysanthemums, carnations, flowering asters, daisies and lilies one the one hand and evergreen needle bearing trees belong to very different classes or groups of plants. Christmas trees belong to several families of the Order of Coniferales of the Division of the gymnosperms. All flowering plants (including all agricultural crops) belong to the other major division of the Plant Kingdom, the angiosperms (L. Benson, Plant Classification, 2nd Edition, 1979, D. C. Heath and Co, Lexington MA, USA). This Division encompasses both mono-and dicotylons, so ranges from trees like oak and birch and ornamental flowers like roses, carnations to grasses and ornamental flowering monocotylons like tulips, lilies etc. The angiosperms evolved from the early gymnosperms some 180 million years ago, in the Jurassic. Gymnosperms and angiosperms not only differ in their reproductive organs (naked vs covered seeds) but also in their mechanism for water transport. Whereas angiosperms have vessels for water transport, gymnosperms have a more primitive system of tracheids (W. Dallmore and A.B. Harrison, A handbook of Conifera and Ginkgoacea, 4th Edition, Edward Arnold Publishers, London 1974, thus water transport differs. Consequently, Christmas trees are genotypically and phenotypically very different from flowering plants and crops. Moreover flowers and needles are botanically different organs. Therefore the mechanisms of wilting of flowers and shedding (abciscion) of needles by Christmas trees are quite different.

Therefore improving the keepability of cut flowers (retarding senescence) and retarding the needle loss of Christmas trees are different problems to solve. Moreover with cut flowers there is e.g. the problem of wilting or bending the neck of the flowers; whereas with Christmas trees there is e.g. the problem of fire resistance.
Patent searching further revealed the following citations: Eastern German (DDR) patent specification (DD-A-)214 522 (Forschungszentrum) disclosing increasing the harvest of agricultural crops for use as food. Members of the gymnosperm family are cultivated for their timber or ornamental value and they are no agricultural crops in the proper sense, as are wheat, beets, potatoes etc. Furthermore most crops mentioned in this citation are annual plants, whereas Christmas trees take several years to mature and be harvested. This citation discloses improving water usage (Wasserausnützung) by applying to the soil ethanolamine in combination with salicylic acid, acetylsalicylic acid or phenoxyisobutyric acid and optionally EDTA or its Fe(III) complex. It does not address the problem of preventing loss of needles with Christmas trees.
The patent literature further yielded Derwent Abstract AN 75-28141W (JP-A-49 102862 to Rengo Co Ltd) disclosing keeping fruits, vegetables and seedlings alive in containers which contain a terpene alcohol or ester, abscidic acid and tropolone or a derivative thereof. Fruits, vegetables and seedlings are genetically and as to water transport very different from Christmas trees as explained above and the problem solved here is quite different from preventing the loss of needles with Christmas trees. The compounds were introduced in closed containers with seedlings by rubbing a pva emulsion containing the compounds on a polyethylene film attached to the inner side of a paper box containing seedlings which improved the viability of the seedlings etc. There was no direct contact with the plants. Moreover in the case of treating Christmas trees according to the present invention there is no question of closed containers.

Increasing the keepability of Christmas trees is important because in practice it usually takes over one week, but sometimes up to about 6 weeks (after harvesting) before the Christmas tree reaches the user. After such a period supplying water increases the keepability somewhat, but this is as a rule insufficient to keep the tree in good condition until the end of the Christmas period often extending int the new year, even after having made a fresh cutting surface .

Surprisingly the present invention aims to retard the loss of needles from Christmas trees in a simple way at home, in shops, offices, sales rooms etc for a longer period than is obtainable with water alone. Furthermore the fire safety at home is increased and as an additional effect a scent effect is obtained by which the tree retains and/or obtains an attractive smell of pine for a longer period than otherwise.

The term Christmas trees is also understood to cover parts of Christmas trees, branches, small branches etc., and of course also when they are made into decorative Christmas arrangements (Christmas bouquets) optionally together with (other parts) of plants.

It is important to bear in mind that Christmas trees are already cut or dug up with a root ball weeks before Christmas and are usually being transported by the traders on lorries towards the consumer ("user"). A period of 5 to 30 days is a realistic period, but longer periods sometimes also occur. During this period taking care of the trees is hardly workable and this fact complicates solving the problem of increasing the keepability. Subsequently the Christmas trees usually reach the consumer via the seller, and the former keeps the tree for a period of a few days to about 30 days at room temperature in a, most of the time, dry atmosphere (caused by central heating).

Consequently problems crop up like loss of needles, the tree becoming unattractive, the tree becoming less safe from fire and also that the water supplied (in a Christmas tree stand) starts reeking caused by microbial spoilage. The fire hazard problem is particularly important when candles are lit in the tree. Furthermore the characteristic pine smell, if present, decreases and disappears too quickly.

Many (plastic) Christmas-tree stands have a device by which the lower cut end of the tree can be put in (tap) water, which delays the development of the problems mentioned above somewhat; sometimes Christmas trees are put in foamed plastic having an open cell structure (e.g. OASIS ™) which has been saturated with water; in earth/sand, in gravel or in granules for hydroculture. However, many trees are still delivered, stored on a simple wooden cross and so used by the consumer.

The present invention aims at treating the tree with an (aqueous) composition which diminishes the above problems considerably. Treating the tree comprises spraying the tree once cut or tree with a root ball with the (aqueous) solution or oily mixture, by especially immersing, or more in particular keeping the lower cut end of the tree immersed in the aqueous solution. In this respect it is especially preferred to remove the original, dried cutting surface of the tree by making another fresh cutting surface (or clipping surface) a few centimetres further in the same manner as one cuts off cut flowers again before putting them in a vase. It will be understood that for an optimal result during storage at home it is preferred to renew and/or replenish said solution.

In a first embodiment the invention provides a composition for increasing the keepability of Christmas trees with more than can be achieved with water alone, which composition contains at least one organic compound with at least one C6-ring and further optionally a carrier material and/or water. The C6-ring(s) present can be both saturated or unsaturated, for example aromatic.

According to a preferred embodiment of the invention is the organic compound with a C6-ring is for example a benzene derivative such as anisole and/or benzoic acid or a derivative thereof. Under derivatives of benzoic acid are here to be understood compounds in which the carboxylic group has been reacted, e.g. to form an ester group, but also a compound in which substitution has taken place at the ring for instance with a hydroxyl group, also both possibilities can be effected at the same time. Thus for instance salicylic acid or an ester thereof can be used quite well. Very suitable esters of salicylic acid are for instance acetylsalicylic acid, propionylsalicylic acid, methylsalicylate and phenylsalicylate. These compounds can be used alone and in combination. These compounds are not only accessible synthetically but also as components of essential oils as for instance wintergreen (Pyrola) oil and can be obtained by (partially) working up natural products. Particularly suitable are steam distillates or extracts from various plant species.

According to another embodiment of the invention is using a terpenoid compound as the organic compound with at least one C6-ring. Such terpenoid compounds are often di- or triterpenes and these can also be used alone or in combination. Particular suitable terpenoid compounds are terpenoid compounds of the group comprising borneol, bornyl acetate, limonene, camphene, α-pinene and tricyclene. Such compounds are for instance well accessible as certain essential oils and can be obtained by working up natural products. Particular suitable are steam distillates or extracts from parts of coniferous trees, in particular steam distillates of needles from coniferous trees. Fractionation of such steam distillates before use is not necessary as a rule. Using this type of compounds has the additional advantage that they circulate a scent reminiscent of the scent of Christmas trees and furthermore these compounds have a preserving effect on the ready-to-use aqueous solution, so that this does not have to be renewed, but can simply be replenished during the entire Christmas period and if desired also during the first week of the new year.
These compounds can be used as such, but preferably in combination with benzene derivatives such as anisole and/or benzoic acid and/or derivatives thereof.

According to a particular embodiment the organic compound with at least one C6-ring is abscinic acid (systematic name [S-(Z,E)]-5-(1-hydroxy-2,6,6-trimethyl-4-oxo-2-cyclohexen-1-yl)-3-methyl-2,4-pentadienoic acid). This substance also can be prepared synthetically, but can also be used as a plant extract/steam distillate. It is known that this substance occurs in platanus, birch, rose leaves, various cabbages, potatoes, lemon and avocado. This compound can be used as such, but also in combination with benzene derivatives such as benzoic acid or a derivative as well as a terpenoid. This substance is usually dosed in ready-to-use solutions in concentrations which are 0.1 to 200 micromolar (µmolair).

Consequently the invention comprises a composition with a compound with at least one C6-ring as benzene derivatives such as anisole, benzoic acid or a derivative thereof, salicylic acid or an ester thereof such as acetylsalicylic acid, propionylsalicylic acid, methylsalicylate and phenylsalicylate and/or at least one terpenoid compound as for instance borneol, bornyl acetate, limonene, camphene, α-pinene and tricyclene and/or abscinic acid optionally with a carrier material and/or water. A very suitable natural concentrate of terpenoids is for instance "oil fir needle siberian", a natural concentrate of terpenoids ex Brüder Unterweger, A-9911 Thal-Assling, Austria. Another suitable product is for instance "oil fir needle Austrian". Both products contain a number of the above mentioned terpenoids.

Binary combinations of at least one benzene derivative as anisole, benzoic acid or derivative and at least one terpenoid compound optionally together with a carrier material and/or water are preferred. The carrier material used can be of organic or inorganic origin. Suitable carrier materials which can be used are for instance silica, zeolite, kieselguhr (diatomaceous earth) polyethylene glycol, starch, maltodextrin, polystyrene, OASIS, saw dust and the like. The amount of sugar present in these compositions is usually very low (from 0 to 15, preferably 0 to 10, more preferably 0 to 5% w.w. calculated as dry material) and still better sugars are absent.

In a particular embodiment the invention comprises a ready-for-use solution which contains 0.1 - 10 ml terpenoid(s) and/or 1 - 500 micromolar salicylic (derivative) per litre of aqueous solution with or without carrier material. In another embodiment the invention relates to a composition as described above which is in the form of a solid material, a paste or a liquid.

In another embodiment the invention comprises a unit dosage which serves to prepare a ready-for-use aqueous solution, oil or emulsion/suspension for increasing the keepability of Christmas trees as herein before defined and is in the form of a tablet, a measured quantity of powder, a paste or a liquid as a packaged unit. As packaged unit may serve small bags, or sachets whether or not made of plastic, ampoules, small bottles, tablets and the like. As a rule the contents of active ingredients will be sufficient to prepare from 0.1 to 2.5 litres, or even up to 10 litres, of ready-for-use solution as described above.

In another embodiment the invention comprises a process for increasing the keepability of Christmas trees by putting them, preferably with the roots or a freshly cut surface of the trunk, in a container in which the liquid as described herein before is present or which liquid alternatively has been prepared by dissolving/diluting a composition as described herein before or alternatively from a unit dosage to form a solution which is ready for use.

In another embodiment the invention comprises a Christmas tree of which the cut surface or the root ball has been provided with a composition according to the invention as herein described before.

In another embodiment the invention comprises a Christmas tree which has been coated with a composition according to the invention for example by spraying the tree or immersing in a liquid, oil or emulsion which comprises the composition according to the invention.

In another embodiment the invention comprises branches of a Christmas tree which have incorporated in a decorative Christmas arrangement made with Christmas trees (Christmas bouquet).

The invention will be further illustrated below in the form of the following non-limitating examples. All percentages and parts mentioned herein are on a weight basis unless otherwise indicated.

### Example 1

Branches with a length of about 30 cm were cut from freshly cut off (harvested) Christmas trees (Picea abies) kept and stored at ambient temperature in glass bottles containing 100 ml tap water with various amounts of sodium salicylate, (10-200 micromolar), benzoic acid (10 and 50 micromolar), silver nitrate (10-200 micromolar), abscisinic acid (10-50 micromolar), "oil fir needle siberian" a concentrate of natural terpenoids ex Brüder Unterweger, A-9911 Thal-Assling, Austria (1 ml/l) or combinations thereof. All experiments were made in triplicate and tap water was supplied at regularly spaced intervals to prevent drying out. The amount of needles lost was visually determined. Table 1 shows the average number of days during which loss of needles was still the same as when starting the experiment and this number (of days) is taken as the keepability. The average mean standard deviation was three days.

### Example 2

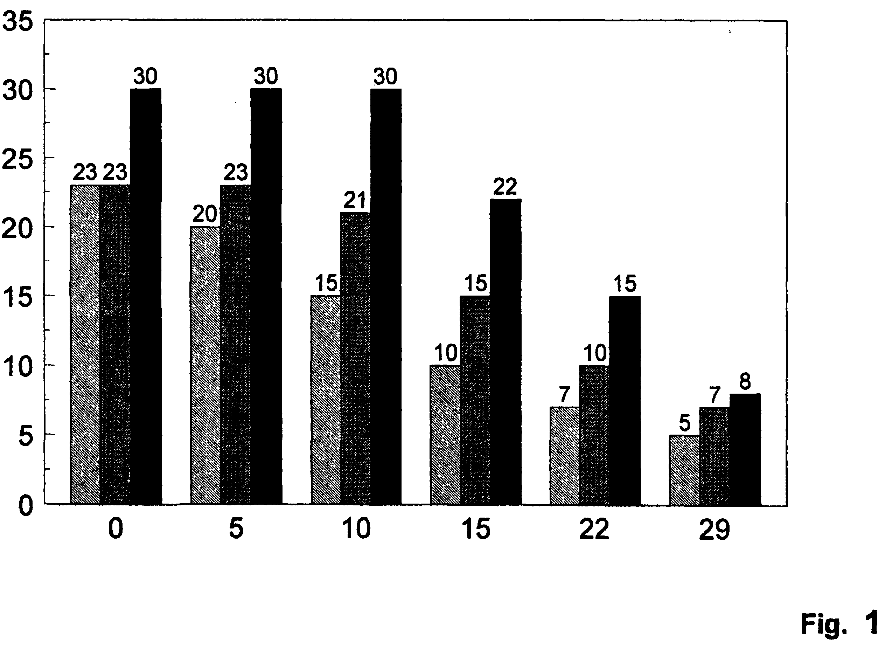

Christmas trees (Picea abies) with a length of about 1 metre were stored at 6°C for 0, 5, 10, 15, 22 and 29 days. After each period three trees were transferred to room temperature (20°C). One of the three trees was put in a container which contained 0.5 l tap water, the second tree was cut off again (5 cm from the end) and put in a container with 0.5 l tap water and the third tree was also cut off again (5 cm from the end) and put in a container with 0.5 l tap water to which a composition was added consisting of 0.5 ml "oil fir needle siberian", a concentrate of natural terpenoids ex Brüder Unterweger, A-9911 Thal-Assling, Austria and 50 micromolar sodium salicylate. Additional amounts of tap water were supplied to the containers to prevent drying out. These experiments were made twice with trees from different locations. All experiments were made in the Netherlands during the period November-January. The amount of loss of needles was visually determined frequently and at regular intervals in time. Figure 1 shows the average number of days (0 - 35 days) during which the loss of needles still remained virtually the same as when the experiment started as a function of the storage time 0 - 29 days) and this number is taken as the keepability at 20°C (y-axis). On the horizontal (x-axis) the storage time in days at 6°C has been indicated. The results for non-cut off trees have been singly hatched (left hand columns) the results obtained with cut off trees have been crosshatched (middle columns) and the results obtained with cut off trees to which the composition according to the invention had been added have been coloured in full black (right hand columns). The average standard deviation was three days.
The same result was obtained when 50 micromolar sodium salicylate was replaced by 50 micromolar anisole (methoxybenzene).

### Example 3

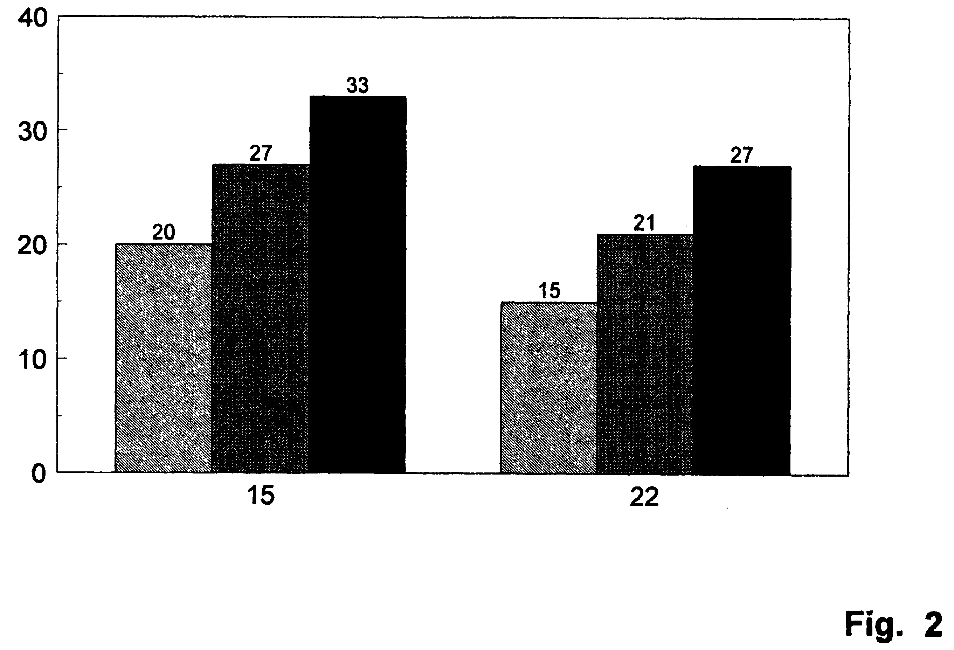

Freshly cut off Christmas trees (Picea omorika) with a length of about 1 metre directly obtained from the field were stored at 6°C for 15 days. Subsequently three trees were transferred to room temperature (20°C) and treated and judged during this period as described in Example 2. These experiments were made in triplicate. Figure 2 shows the average number of days (0 - 40 days) during which the loss of needles remained virtually the same as when the experiment started and this number is taken as the keepability at 20°C (y-axis); this has been plotted against the keepability at 6°C (15 days). The hatching of the columns is described herein before for Figure 1. The average standard deviation was three days.

### Example 4

Freshly cut off Christmas trees (Abies koreana) with a length of about 1 metre directly obtained from the field were stored at 6°C for 22 days. Subsequently three trees were transferred to room temperature (20°C) and treated and judged during this period as described in Example 2. These experiments were made in triplicate. Figure 2 shows at the right-hand side the average number of days (0 - 40 days) during which the loss of needles still remained the same as when the experiments were started and this number is referred to as the keepability (y-axis); this has been plotted as a function of the storage time at 6°C (22 days). The hatching in the Figure is the same as described for Figure 1. The average standard deviation was three days.

### Example 5

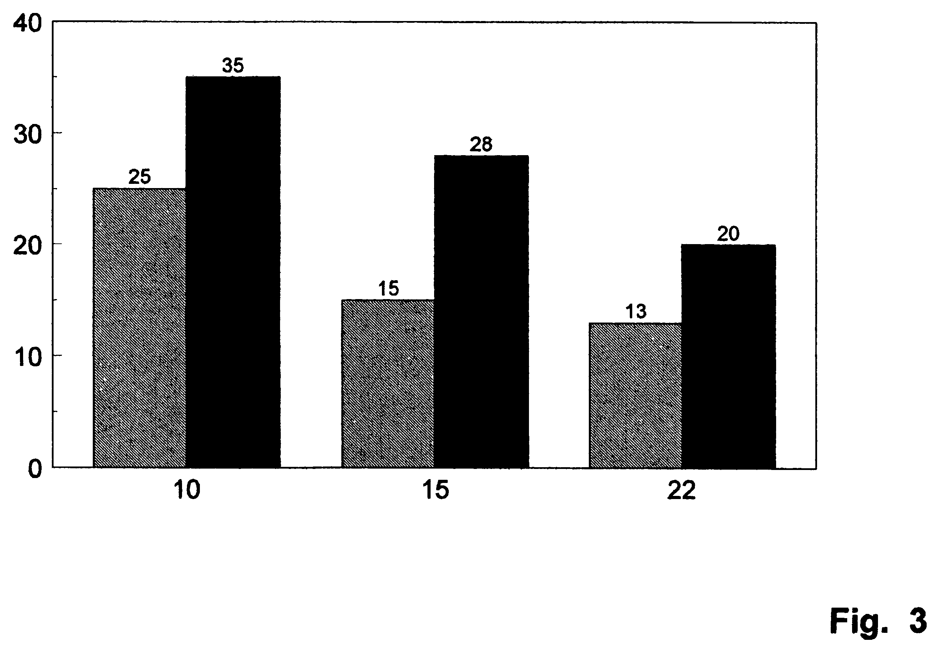

Freshly dug up Christmas trees (Abies koreana) with an earth ball of about 2 kg and with a length of about 1 metre directly obtained from the field were stored at a temperature of 6°C for 10, 15 and 22 days. After each period two trees were transferred to room temperature (20°C) and they were put in a suitable container and 0.5 l tap water was added to the ball of earth. The other tree was put in a similar container and 0.5 l tap water together with a composition were added to the ball of earth. This composition consisted of 0.5 ml "oil fir needle Siberian" and 50 micromolar sodium salicylate. Once a week 0.5 l tap water was supplied to the containers to prevent drying out of the trees. All experiments were made in triplicate and at regularly spaced intervals in time the loss of needles was judged. Figure 3 shows the average number of days during which loss of needles was still the same as when the experiments were started and this number (0 - 40) is referred to as the keepability at 20°C (y-axis); this has been represented as a function of the storage time at 6°C (10, 15, 22 days). The results obtained without the composition according to the invention were hatched simply (left-hand columns) and the results obtained with the composition are in full black. The average standard deviation was three days.

### Example 6

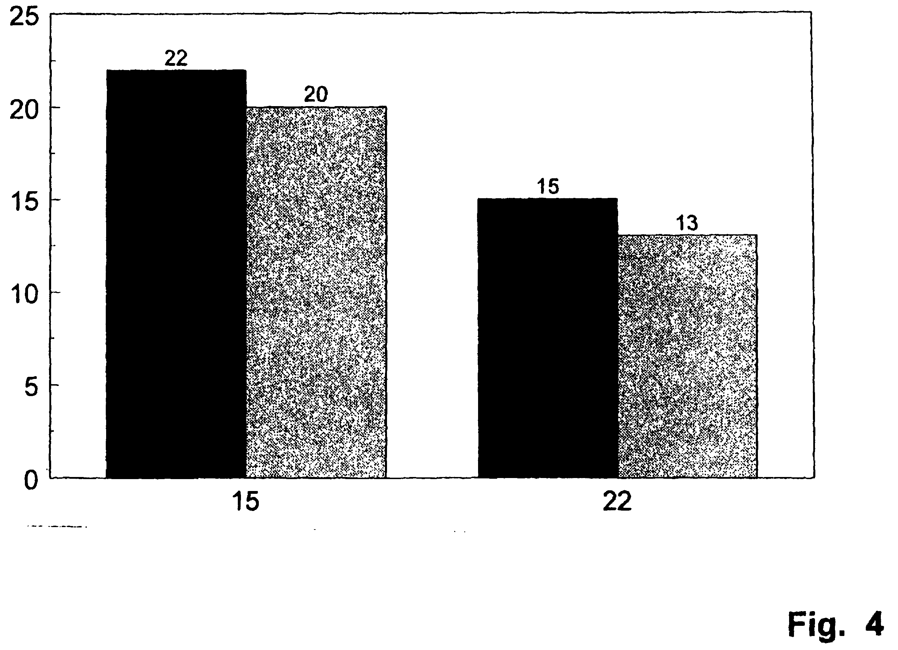

Freshly cut off Christmas trees (Abies koreana) with a length of about 1 metre directly obtained from the field were stored at 6°C for 15 and 22 days. Subsequently they were treated as described in Example 2, with the difference that the composition was mixed with 1 gram of carrier material (Silica, ex Merck) before the composition was added to the containers filled with water. Figure 4 shows at the right-hand side the average number of days at which the loss of needles virtually remained the same as at the beginning of the experiment and this number was taken as the keepability at 20°C (y-axis); this has been represented as a function of storage time at 6°C (15, 22 days). The results obtained without silica are in full black (left-hand columns) and the results obtained with silica are singly hatched (right-hand columns). The average standard deviation was three days.

**Table 1**

| Effect of several additions (µmolar) on the keepability of Picea abies in days. | | | | | | | | | | | | |
|---|---|---|---|---|---|---|---|---|---|---|---|---|
| | no extra addition | Na-salicylate (µmolar) | | | benzoic acid (µmolar) | | AgNO₃ (µmolar) | | | abscisinic acid (µmolar) | | |
| | | 10 | 50 | 200 | 10 | 50 | 10 | 50 | 200 | 1 | 10 | 50 |
| Water | 30 | 35 | 47 | 40 | 32 | 35 | 32 | 36 | 25 | 35 | 38 | 38 |
| Water + Abscisinic acid 10 µmolar) | 38 | 40 | 47 | 45 | Nd | 40 | 40 | 42 | 42 | | | |
| Water + Abscisinic acid (10 µmolar) + AgNO₃ 50 µmolar) | 42 | 45 | 48 | 45 | Nd | Nd | | | | | | |
| Water + oil fir needle siberian (0.5 ml/l | 39 | 45 | 50 | 47 | Nd | Nd | Nd | Nd | Nd | Nd | Nd | Nd |

| | | | | | | | | | | | | |
|---|---|---|---|---|---|---|---|---|---|---|---|---|
| Nd = not determined Average numbers of days are averaged over experiments made in triplicate. The average standard deviation was 3 days. | | | | | | | | | | | | |

## Claims

1. Composition for increasing the keepability of Christmas trees which contains at least one organic compound with at least one C6-ring and further optionally a carrier material and/or water.

2. Composition according to claim 1, characterized in that the organic compound with at least one C6-ring, benzene derivatives such as anisole and/or benzoic acid.

3. Composition according to claim 1 or 2, characterized in that the organic compound with at least one C6-ring is salicylic acid or an ester thereof.

4. Composition according to claim 3, characterized in that as ester of salicylic acid, acetylsalicylic acid, propionylsalicylic acid, methylsalicylate, and/or phenylsalicylate is used.

5. Composition according to claim 1, characterized in that as organic compound with al least one C6-ring a terpenoid compound is used.

6. Composition according to claim 5, characterized in that as terpenoid compound a compound is used from the group comprising borneol, bornyl acetate, limonene, camphene, α-pinene and tricyclene.

7. Composition according to claim 1, characterized in that the organic compound with at least one C6-ring is abscinic acid (systematic name: [S-(Z,E)]-5-(1-hydroxy-2,6,6-trimethyl-4-oxo-2-cyclohexen-1-yl)-3-methyl-2,4-pentadienoic acid) or a derivative thereof.

8. Composition according to a preceding claim, characterized in that the composition comprises at least a compound according to claims 2, 3 or 4 and/or a compound according to claim 5 or 6 and/or abscinic acid.

9. Composition according to a preceding claim, characterized in that organic or inorganic material is used as carrier material.

10. Composition according to a preceding claim, characterized in that the ready-for-use solution comprises per litre of (aqueous) solution 0.1 - 10 ml terpenoid(s) and/or 1 - 500 micromol salicylic acid (derivative) with or with-out carrier material.

11. Composition according to a preceding claim, characterized in that the composition is in the form of solid material, a paste or a liquid.

12. Unit dosage for the preparation of a ready-for-use (aqueous) solution, oil or emulsion for the increasing the keepability of Christmas trees as defined which is in the form of a tablet, measured quantity of powder, paste or liquid optionally as a packaged unit.

13. Process for increasing the keepability of Christmas trees by putting them preferably with the roots or a freshly cut surface of the trunk in a container in which the liquid as described in claim 10 is present or which liquid alternatively has been prepared by dissolving/diluting a composition according to claim 11 or alternatively a unit dosage according to claim 12.

14. Christmas tree of which the cutting surface or the root ball has been provided with a composition according to any of the preceding claims.

15. Christmas tree which has been coated with a composition according to the invention.
